# EUROPEAN PATENT APPLICATION

(11) **EP 2 065 998 A1**
(43) Date of publication of application: **03.06.2009**
(21) Application number: 08015968.4
(22) Date of filing: 10.09.2008
(51) Int. Cl.: H02J 7/00, H01M 10/46

(54) **Battery structure and charging device adapted for the battery structure**

(30) Priority: 11.09.2007 TW 96133842
(71) Applicant: Jao, Yen-Chung, Situn, Taichung City 407 (TW)
(72) Inventor: Jao, Yen-Chung, Situn, Taichung City 407 (TW)
(74) Representative: Brandenburger, Karin

(57) **Abstract**

A battery structure and a charging device adapted for the battery structure are provided. The battery structure comprises N battery cells, (N-1) movable connectors, and protection device, wherein N is a positive integer greater than one. The charging device comprises an open circuit device and a power supply. The N battery cells are arranged next to each other, and each battery cell has two junctions. When the battery structure is discharging each movable connector electrically connects the two adjacent junctions of the every two adjacent battery cells, wi th all the battery cells cascaded. When the battery structure is changed by the charging device, the open circuit device will enable the movable connector to disconnect the two adjacent junctions of the two adjacent battery cells so that there would be open circuits between every two adjacent battery cells. Then, the 2N charging junctions of the power supply charge the junctions of each battery cell individually.

## Description

This application claims the benefit of priority based on Taiwan Patent Application No. 096133842 filed on September 11, 2007, the disclosures of which are incorporated by reference herein in their entirety.

### CROSS-REFERENCES TO RELATED APPLICATIONS

Not applicable.

### BACKGROUND OF THE INVENTION

### Field of the Invention

The present invention relates to a battery structure and a charging device adapted for the battery structure; and more particularly, relates to a battery structure that allows charging of individual battery cells therein respectively and a charging device adapted for the battery structure.

### Descriptions of the Related Art

Presently, many portable electronic apparatuses adopt rechargeable batteries as the power source. When the power runs out, the battery has to be recharged via an alternating current (AC) or a direct current (DC) power source for reuse. Rechargeable batteries currently available generally fall into the following categories: nickel cadmium (NiCd) batteries, nickel metal hydride (NiMH) batteries and lithium batteries.

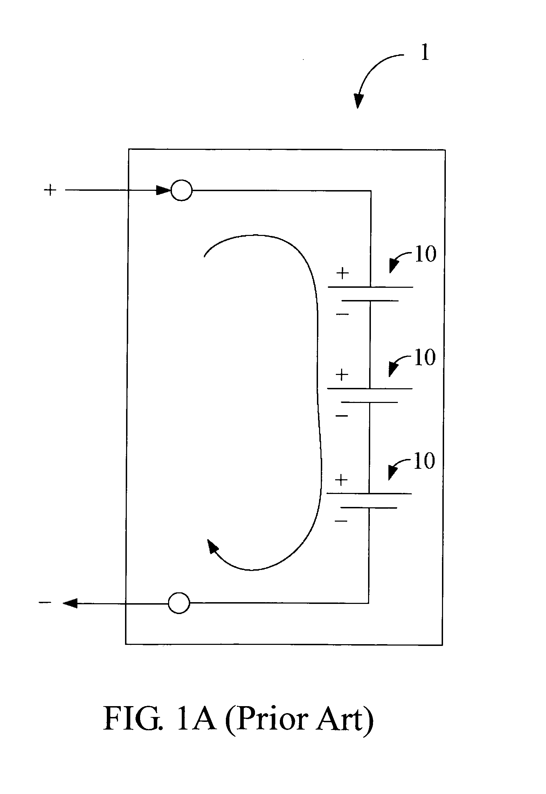

To obtain an adequate voltage from a rechargeable battery, an electronic apparatus usually has a number of rechargeable battery cells cascaded to supply a desired voltage. A schematic view of the cascaded battery cells in a conventional rechargeable battery **1** is schematically shown in **FIG 1A****.** During the charging process, the rechargeable battery will have all the battery cells **10** recharged simultaneously. However, due to the variations of the manufacturing process and other factors, the individual battery cells **10** in the rechargeable battery **1** have different charging and discharging statuses. For example, during the charging process of the current rechargeable battery **1,** some battery cells have already been fully charged while the others will have not. In other words, to complete the charging process on all the battery cells, those that are already fully charged will inevitably be over-charged due to the continued charging process. This may decrease the service life and capacity of the battery cells and even cause possible deformation or accidents such as explosion.

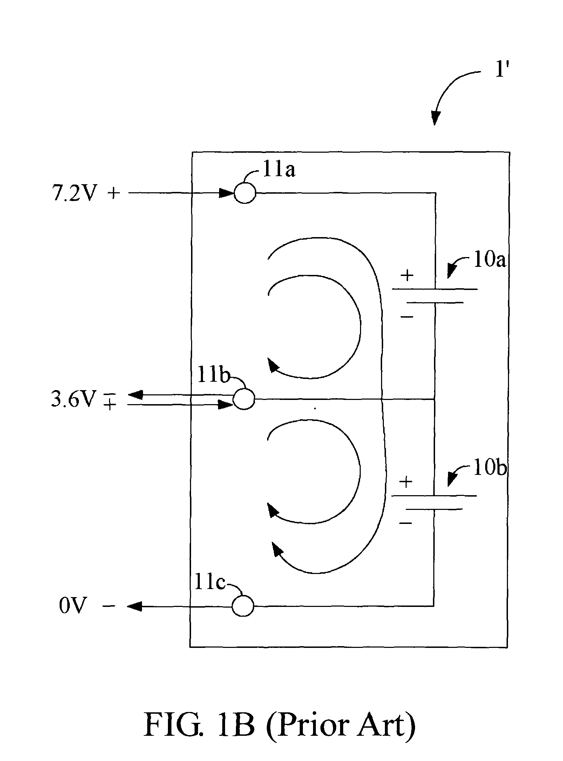

To overcome the aforesaid drawbacks and have battery cells be individually charged, some charging methods have been proposed in the prior art. For example, extended junctions have been formed between battery cells or the voltage has been divided via an external electronic component. **FIG. 1B** illustrates a schematic of the conventional charging method of an extended junction between the battery cells. The rechargeable battery **1'** has a first battery cell **10a** and a second battery cell **10b,** both requiring or supplying a voltage of 3.6V Hence, the three junctions **11a, 11b, 11c** extended from the battery cells **10a, 10b** have a potential of 7.2V, 3.6V and 0V respectively. During the charging process, the battery cells are also charged with a voltage of these three voltage values. However, in this structure, a potential difference exists between the individual battery cells **10a, 10b,** so that a charging current will occur between the junction **11a** at a potential level of 7.2V and the junction **11c** at a potential level of 0V, making it impossible to charge the battery cells individually. Similarly, in a structure which charges battery cells individually via external electronic components in a simulation way, a total voltage is inputted across two junctions at both ends and divided by the external electronic components to charge the battery cells individually. However, the battery cells in the battery structure remain connected in cascade. It is still impossible to substantially charge the battery cells individually, and thus is not a real individual-charging solution.

Although these prior art solutions charge battery cells by imitating an individual-charging process, they actually charge the battery cells by dividing the voltage levels and failing to cope with variations among the individual battery cells. Consequently, over-charging still occurs in such prior art solutions, which has an impact on the operational performance of the battery as a whole and even causes occurrence of risks. Accordingly, it is highly desirable in the art to provide a solution guaranteeing the complete charging of each battery cell without being influenced by the charging status of other battery cells.

### SUMMARY OF THE INVENTION

One objective of this invention is to provide a battery structure. The battery structure comprises N battery cells and (N-1) movable connectors, wherein N is an integer larger than 1. The N battery cells are arranged next to each other and each has two junctions. Each of the (N-1) movable connectors electrically connects two adjacent junctions of every two adjacent battery cells so that all the battery cells are cascaded while the battery structure is discharging. Each of the movable connectors disconnects the two adjacent junctions of every two adjacent battery cells so that every two adjacent battery cells are electrically disconnected while the battery structure is charging.

Another objective of this invention is to provide a charging device adapted for the aforesaid battery structure. The charging device comprises an open circuit device and a power supply. The open circuit device is adapted to disconnect each of the movable connectors from the two adjacent junctions. The power supply comprises 2N charging junctions, which are electrically connected to the two junctions of each of the N battery cells respectively to provide a charging power. The power supply charges the battery cells individually through the 2N charging junctions while the open circuit device disconnects the movable connectors from the junctions to electrically disconnect the two adjacent junctions of the every two adjacent battery cells.

The battery structure of this invention has movable connectors, which are disconnected from the junctions by the open circuit device during the charging process to disconnect the two originally electrically connected adjacent junctions. In this way, the battery structure allows the battery cells therein to be charged individually, thus meeting the different charging demands of the individual battery cells.

The detailed technology and preferred embodiments implemented for the subject invention are described in the following paragraphs accompanying the appended drawings for people skilled in this field to well appreciate the features of the claimed invention.

### BRIEF DESCRIPTION OF THE DRAWINGS

**FIG 1A** illustrates the conventional rechargeable battery cells charged in cascade;
**FIG. 1B** illustrates the conventional charging method of an extended junction between the battery cells;
**FIG. 2** illustrates the discharging process of a battery structure in accordance with the first embodiment of this invention;
**FIG 3A** illustrates the charging process of the battery structure and a charging device thereof in accordance with the first embodiment of this invention;
**FIG. 3B** illustrates the charging process of another example of the battery structure and the charging device thereof in accordance with the first embodiment of this invention; and

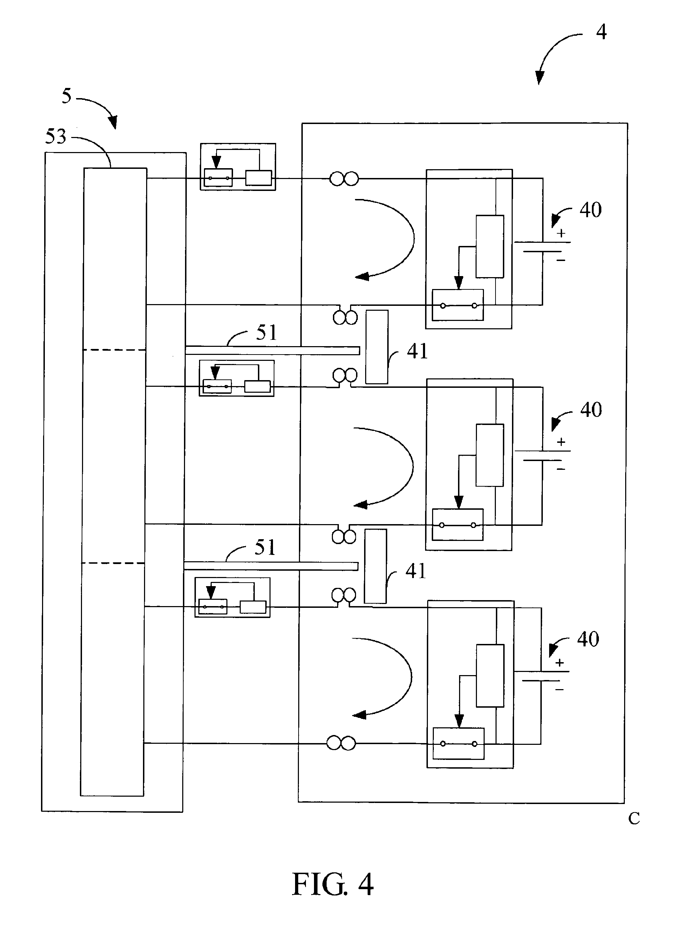

**FIG. 4** illustrates the charging process of a battery structure and a charging device thereof in accordance with the second embodiment of this invention.

### DESCRIPTION OF THE PREFERRED EMBODIMENT

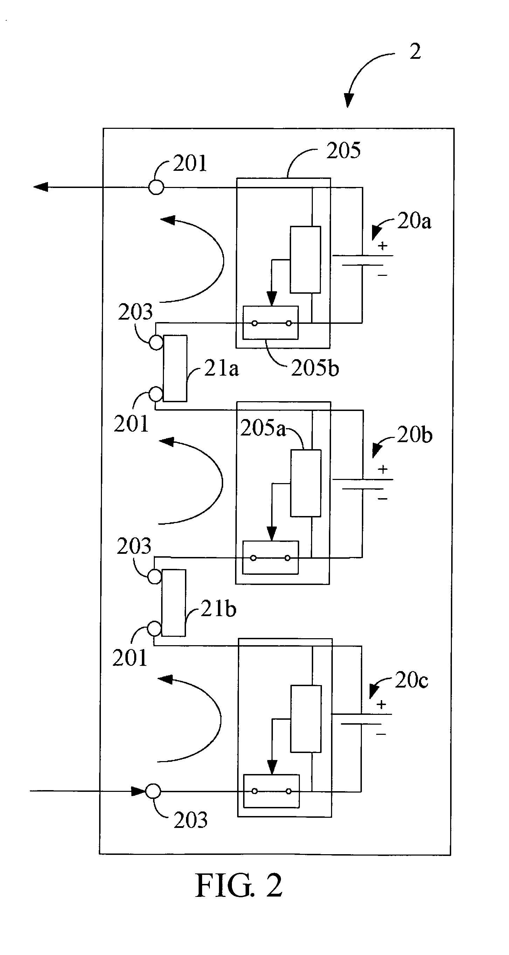

The first embodiment of this invention discloses a battery structure **2** adapted to supply power to an electronic apparatus (not shown). The discharging process of the battery structure **2** is schematically illustrated in **FIG 2****.** The battery structure **2** comprises three battery cells **20a, 20b, 20c** and two movable connectors **21a, 21b.** The three battery cells **20a, 20b, 20c** are arranged next to each other, and each have two junctions, namely, a positive junction **201** and a negative junction **203.** Additionally, each of the battery cells **20a, 20b, 20c** has a protection device **205.** It should be noted that the number of battery cells illustrated in the battery structure **2** of this embodiment is only for purpose of illustration, rather than to limit the scope of this invention. In practice, the number of battery cells in this embodiment may vary depending on the voltage level actually used. In this embodiment, if each of the battery cells **20a, 20b, 20c** may supply a voltage of 1.5V and a voltage of 4.5V is desired in an electronic apparatus, the three battery cells **20a, 20b, 20c** of the battery structure **2** can be used in a cascade.

As shown in **FIG. 2****,** during the discharging process of the battery structure **2,** each of the movable connectors **21a, 21b** are electrically connected to two adjacent junctions of every two adjacent battery cells **20a, 20b, 20c** to connect the battery cells **20a, 20b, 20c** in cascade. Finally, by connecting the positive junction **201** of the battery cell **20a** and the negative junction of the battery cell **20c** to the electronic apparatus, a power supply with a voltage level of 4.5V is obtained.

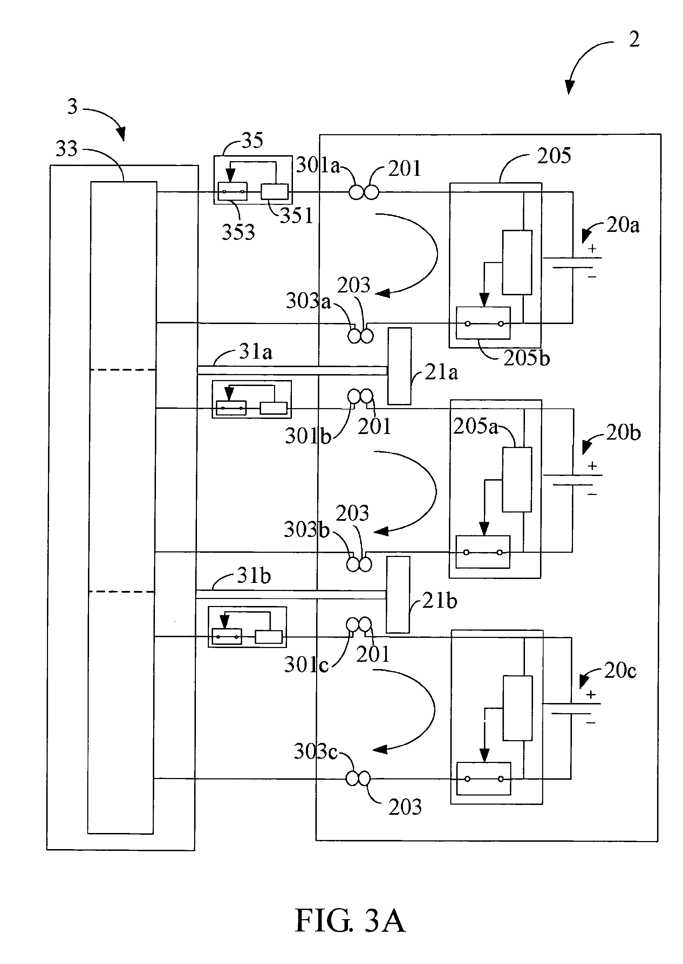

When at least one of the battery cells **20a, 20b, 20c** in the battery structure **2** needs to be charged, a charging device **3** is used in this invention to charge the battery structure **2.** A corresponding charging process is schematically shown in **FIG. 3A****.** The charging device **3** comprises two open circuit devices **31a, 31b,** and a power supply **33.** In this embodiment, the power supply **33** has six charging junctions **301a, 301b, 301c, 303a, 303b, 303c.** In this embodiment, the open circuit device **31** is a mechanical pushing device. In other preferred examples of this embodiment, the charging device **3** further comprises three overtemperature cutoff devices **35,** the functions of which will be described in detail hereinafter.

Specifically, the charging device **3** has a profile conforming to the overall structure of the battery structure **2.** During the charging process, the two open circuit devices **31a, 31b** of the charging device **3** are inserted into the interior of the battery structure **2,** which then push the two movable connectors **21a, 21b** out of the battery structure **2** to disconnect from the two adjacent junctions between the two adjacent battery cells. Consequently, the two adjacent junctions between every two adjacent battery cells are electrically disconnected, thereby to disconnect the originally cascaded battery cells **20a, 20b, 20c** from each other.

The six charging junctions **301a, 301b, 301c, 303a, 303b, 303c** of the power supply **33** are electrically connected with the two junctions **201, 203** of the battery cells **20a, 20b, 20c** respectively to supply a charging power for charging the battery cells **20a, 20b, 20c** individually. More specifically, the charging junctions **301a, 303a** supply a charging voltage of 1.5V to the battery cell **20a,** the charging junctions **301b, 303b** supply a charging voltage of 1.so to the battery cell **20b,** and the charging junctions **301c, 303c** supply a charging voltage of 1.5V to the battery cell **20c,** thereby charging the battery cells individually.

Furthermore, in the preferred example, to guarantee safety during the charging process of the individual battery cells, the battery structure **2** and the charging device **3** both have a protection device adapted to protect the battery cells, i.e., the protection devices **205** within the battery cells **20a, 20b, 20c** and the overtemperature cutoff device **35** within the charging device 3 as described above.

The protection devices **205** are configured to prevent the battery cells **20a, 20b, 20c** from overcharging, overdischarging, overcurrentting, and short circuiting. Specifically, the battery cells **20a, 20b, 20c** all have a number of protection devices **205,** each of which includes a detecting unit and a first switch **205b.** In this embodiment, the detecting unit is an overcharge detecting unit **205a,** which is connected in parallel in each of the battery cells **20a, 20b, 20c.** The first switch **205b** has a control input terminal adapted to control the overcharge or overdischarge in response to the detection signal from the overcharge detecting unit **205a.** Once the overcharge detecting unit **205a** detects an overcharge status, the first switch **205b** is opened to disconnect the charging or discharging circuit. In other examples, the detecting unit may also comprise an overdischarge detecting unit or an overcurrent/short circuit detecting unit disposed in an appropriate connection manner within the battery cells **20a, 20b, 20c** respectively.

Each of the overtemperature cutoff devices **35** comprises a temperature sensing element **351** and an overtemperature cutoff switch **353.** The temperature sensing elements **351** are configured to sense the temperature of the battery cells **20a, 20b, 20c** and be connected with the battery cells **20a, 20b, 20c.** Once the temperature of the battery structure **2** goes higher than the threshold value, the temperature sensing element **353** transmits a signal to the overtemperature cutoff switch **353.** In response to this signal, the overtemperature cutoff switch **353** cuts off the charging power supplied by the power supply **33** to guarantee the charging safety of the individual battery cells.

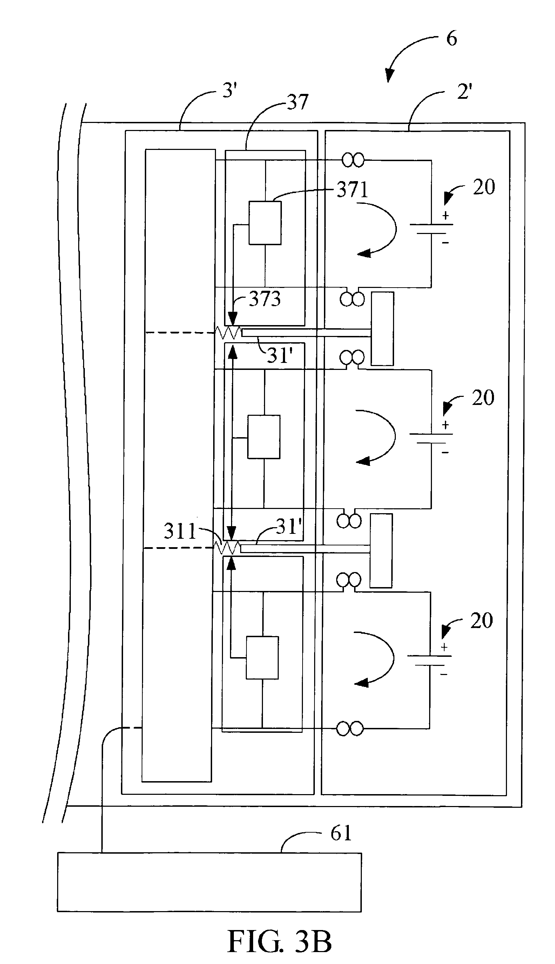

Additionally, the battery structure **2** of this invention further provides a battery structure **2'.** The schematic view of the battery structure **2'** is shown in **FIG 3B****.** Currently, there is a tendency for common electronic apparatuses **6,** such as notebook computers, mobile phones and multimedia players, to be designed to operate on a combination of AC/DC power supplies. In other words, in addition to the battery structure **2',** the electronic apparatus **6** is also enabled to operate on an AC power source **61** to provide more convenience. Accordingly, the battery structure **2'** of this invention allows the battery cells to be charged individually in such a power source design of the electronic apparatus **6.**

Specifically, the charging device **3'** of this invention is disposed within the electronic apparatus **6,** and can be electrically connected to the AC power source **61** via a plug of the electronic apparatus **6.** In this example, in addition to the elements described in the charging device **3** of the previous embodiment, the charging device **3'** further has a power detecting device **37** which comprises a power detecting element **371** and a reset switch **373.** Additionally, the open circuit device **31'** has a compressible resilient mechanism **311.**

Once the power detecting element **371** detects that the electronic apparatus **6** is not operating on the AC power source, the reset switch **373** drives the open circuit device **31'** to enable the movable connectors **21a, 21b** to connect the two adjacent junctions of every two adjacent battery cells **20.** More specifically, the reset switch **373** compresses the resilient mechanism **311** of the open circuit device **31'** to disconnect the open circuit device **31'** from the movable connectors **21a, 21b,** so that the movable connectors **21a, 21b** connects the two adjacent junctions of every two adjacent battery cells **20.** Then, the battery structure **2'** acts as a power source adapted for the electronic apparatus **6.**

On the other hand, when the electronic apparatus **6** is electrically connected to the AC power source **61,** the AC power source **61** will charge the battery cells of the battery structure **2'** individually apart from powering the electronic apparatus **6.** In more detail, as shown in **FIG. 3****,** once the power detecting element **371** detects that the electronic apparatus **6** is operating on the AC power source, the reset switch **373** drives the open circuit device **31'** to enable the movable connectors **21a, 21b** to disconnect from the two adjacent junctions of every two adjacent battery cells **20.** More specifically, the reset switch **373** releases the resilient mechanism **311** of the open circuit device **31'.** At this point, the open circuit device **31'** is reset under the releasing resilient mechanism **311,** and drives the movable connectors **21a, 21b** to be disconnected from the two adjacent junctions of the two adjacent battery cells **20.** Then, the AC power source **61** charges the battery cells of the battery structure **2'** individually until the battery structure **2'** is fully charged. Upon completion of the charging process, the electronic apparatus **6** may be powered simply by the AC power source **61,** with the battery structure **2'** acting as the backup power source.

The second embodiment of this invention is a battery structure **4.** Unlike the first embodiment, a reed switch is used for the open circuit switch **51** of the charging device **5** in the battery structure **4,** while the movable connectors **41** in the battery cells **40** have a magnetic polarity that repulses the reed switch.

Like the first embodiment, during the discharging process of the battery structure **4,** the movable connectors **41** electrically connects two adjacent junctions of every two adjacent battery cells **40** to cascade the battery cells **40,** so that a positive and a negative junction of the two outermost battery cells **40** respectively are electrically connected to the electronic apparatus to supply power.

On the other hand, during the charging process, the reed switch functions as the open circuit device **51.** When moving closer to the magnetic movable connectors **41,** the reed switch delivers a repulsive magnetic force to disconnect the movable connectors **41** from the two corresponding adjacent junctions. As a result, the electrical connection between the two adjacent junctions is disconnected, and hence, the battery cells **40** are disconnected from each other. Thereafter, the charging device **5** charges the battery cells **40** individually also via the charging junctions of the power supply **53.**

In another example, the movable connectors are set to have the same magnetic polarity as the reed switch. In this case, the movable connectors are disconnected when being attracted by the reed switch during the charging process. Those skilled in the art will appreciate that slight modifications shall be made to other elements in this example to match the structure of this example.

It should be reemphasized that the number of various elements described in the previous embodiments are only for the purpose of illustration, and in practice, the number of battery cells used in the battery structure of this invention may be any positive integer larger than 1. That is, if there are N battery cells, where N is a positive integer larger than 1, then (N-1) movable connectors are needed to accomplish the electrical connections between the individual battery cells. Additionally, since each of the battery cells has two junctions, there are 2N junctions in total, and the power supply of the charging device also needs to have 2N charging junctions corresponding to the 2N junctions to accomplish the charging operation.

Furthermore, the open circuit device in the aforesaid embodiments may also be implemented in other forms, shapes or at other locations. The battery cells in the aforesaid embodiments may be any kind of lithium battery cells, NiMH battery cells or NiCd battery cells.

The above disclosure is related to the detailed technical contents and inventive features thereof. People skilled in this field may proceed with a variety of modifications and replacements based on the disclosures and suggestions of the invention as described without departing from the characteristics thereof. Nevertheless, although such modifications and replacements are not fully disclosed in the above descriptions, they have substantially been covered in the following claims as appended.

## Claims

1. A battery structure, comprising:
N battery cells, arranged next to each other, and each of the battery cells having two junctions, wherein N is an integer larger than 1; and
(N-1) movable connectors, wherein each of the movable connectors electrically connects the two adjacent junctions of the every two adjacent battery cells so that all the battery cells would be cascaded while the battery structure is discharging, and each of the movable connectors disconnects the two adjacent junctions of the every two adjacent battery cells so that the every two adjacent battery cells is electrically disconnected while the battery structure is charging.

2. The battery structure of claim 1, wherein each of the battery cells has a protection device, adapted to avoid overcharge, over discharge, over current, or short circuit.

3. The battery structure of claim 1, wherein each of the battery cells is a lithium battery cell.

4. The battery structure of claim 1, wherein each of the battery cells is a nickel metal hydride (NiMH) battery cell.

5. The battery structure of claim 1, wherein each of the battery cells is a nickel cadmium (NiCd) battery cell.

6. A charging device, adapted for a battery structure of claim 1, the charging device comprising:
an open circuit device, adapted to disconnect each of the movable connectors from the two adjacent junctions; and
a power supply, comprising 2N charging junctions corresponding to the two junctions of each of the N battery cells, and being configured to provide a charging power,
wherein the power supply charges the battery cells separately through the 2N charging junctions while the open circuit device disconnects the movable connectors from the junctions for electrically disconnecting the two adjacent junctions of the every two adjacent battery cells.

7. The charging device of claim 6, further comprising an overtemperature cutoff device, wherein the overtemperature cutoff device stops the power supply supplying the charging power when a temperature of the battery structure is over a threshold temperature.

8. The charging device of claim 7, wherein the overtemperature cutoff device comprises a temperature sensing element and an overtemperature cutoff switch, the temperature sensing element is adapted to sense the temperature, and the overtemperature cutoff switch is adapted to cut off the power supply to stop supplying the charging power.

9. The charging device of claim 6, further comprising a power detecting device, wherein the power detecting device comprises a power detecting element and a reset device, and the reset device drives the open circuit device to enable the movable connector to connect the two adjacent junctions of the every two adjacent battery cells when the power detecting device detects the battery structure is adopted as a power source by an electronic device.

10. The charging device of claim 9, wherein the open circuit device is one of an electromagnetic switch and a mechanical device.

11. The charging device of claim 9, wherein the charging device is adapted for the electronic device, and the electronic device uses an alternating current (AC) source and the battery structure as a power source.

12. The charging device of claim 6, wherein each of the battery cells has a protection device, adapted to avoid overcharge, over discharge, over current, or short circuit.

13. The charging device of claim 6, wherein each of the battery cells is a lithium battery cell.

14. The charging device of claim 6, wherein each of the battery cells is a nickel metal hydride (NiMH) battery cell.

15. The charging device of claim 6, wherein each of the battery cells is a nickel cadmium battery (NiCd) cell.
